# EUROPÄISCHE PATENTSCHRIFT

(11) **EP 3 801 155 B1**
(45) Veröffentlichungstag und Bekanntmachung des Hinweises auf die Patenterteilung: **24.07.2024**
(21) Anmeldenummer: 19725174.7
(22) Anmeldetag: 22.05.2019
(51) Int. Cl.: A47J 42/40, A47J 42/42, A47J 42/50

(54) **KAFFEEMÜHLE**
COFFEE MILL
MOULIN À CAFÉ

(30) Priorität: 31.05.2018 EP 18175384; 05.10.2018 EP 18198888; 05.10.2018 EP 18198887
(43) Veröffentlichungstag der Anmeldung: 14.04.2021
(73) Patentinhaber: Creatrix AG, 9100 Herisau (CH)
(72) Erfinder: DEUBER, Louis, 8805 Richterswil (CH); SCHREPFER, Patrick, 9630 Wattwil (CH); FOSCAN, Claudio, 8645 Jona (CH); SCHULTHEISS, Christian, 8335 Hittnau (CH)
(74) Vertreter: Clerc, Natalia
(86) Internationale Anmeldenummer: PCT/EP2019/063178
(87) Internationale Veröffentlichungsnummer: WO 2019/228879

(56) Entgegenhaltungen:
- WO-A1-02/28244
- WO-A1-2010/085850
- WO-A1-2014/165905
- WO-A1-2018/042569
- CN-U- 207 506 451

## Beschreibung

### TECHNISCHES GEBIET

Die vorliegende Erfindung betrifft eine Kaffeemühle zur Mahlung von Kaffeebohnen für die Getränkezubereitung.

### STAND DER TECHNIK

Kaffee ist ein Genussmittel, welches einer fachgerechten Zubereitung bedarf. Damit Kaffee sein Aroma optimal entfalten kann, sollten die Kaffeebohnen zum Beispiel immer erst unmittelbar vor der Zubereitung des Kaffees gemahlen werden. Da nicht jeder dieselben Sorten Kaffeebohnen bevorzugt, ist es auch wünschenswert, dass möglichst schnell und einfach zwischen verschiedenen Kaffeesorten gewechselt werden kann.

Im Stand der Technik sind Kaffeemaschinen mit integrierten Mahlwerken bekannt, sogenannte Vollautomaten, sowie Siebträger-Espressomaschinen, sogenannte Halbautomaten, mit dazu passenden separaten Kaffeemühlen. Beide Systeme sind relativ kompliziert aufgebaut, relativ gross und entsprechend teuer.

WO 2002/28244 A1 offenbart eine Kaffeemühle mit einem Behälter, einem Mahlwerk und einer Platte zum Öffnen und Schliessen des Auslasses des Behälters. CN 207506451 U zeigt eine Kaffeemühle mit einem Behälter und einem Auslass aus einem Mahlwerk sowie mit einer Aufnahmegabel, die an einer Säule angeordnet ist. An einer vorderen Stirnseite des Gehäuses ist ein manuell zu betätigender Mahlgradeinsteller vorhanden. WO 2018/042569 A1 offenbart eine Kaffeemühle mit einer gebogenen Unterseite, an der eine Siebträger-Aufnahme angeordnet ist und von der sich ein Sockel erstreckt.

### DARSTELLUNG DER ERFINDUNG

Es ist deshalb eine Aufgabe der Erfindung, eine möglichst einfach aufgebaute, flexible Kaffeemühle anzubieten, welche jedoch einen optimalen Kaffeegenuss ermöglicht.

Diese Aufgabe löst eine Kaffeemühle mit den Merkmalen des Patentanspruchs 1.

Die erfindungsgemässe Kaffeemühle zur Mahlung von Kaffeebohnen für die

Getränkezubereitung weist ein Mahlwerk zum Mahlen von Kaffeebohnen und ein im Wesentlichen geschlossenen ausgebildetes Gehäuse auf. Das Gehäuse weist mindestens eine Aufnahme zur Befestigung mindestens eines Kaffeebohnenbehälters auf. Das Mahlwerk ist im Gehäuse angeordnet, wobei das Mahlwerk einen Einlass für die Kaffeebohnen aus dem Kaffeebohnenbehälter und einen Auslass für gemahlene Kaffeebohnen aufweist. Der Auslass führt durch eine unterste Unterseite des Gehäuses nach aussen.

Somit ist das Mahlwerk in einem eigenen im Wesentlichen vollständig geschlossenen Gehäuse angeordnet. Dadurch, dass die Auslassöffnung an einer untersten Unterseite des Gehäuses angeordnet ist, lässt sich die Kaffeemühle beliebig mit anderen Einheiten kombinieren oder auch als eigenständige Vorrichtung verwenden.

Die Kaffeemühle ist vorzugsweise zur Mahlung von Einzelportionen geeignet. In anderen Aussführungsformen ist sie zudem für die Zubereitung von Doppelportionen geeignet. In weiteren Ausführungsformen ist sie alternativ oder zusätzlich zur Zubereitung von Mehrfachportionen geeignet.

Vorzugsweise ist das Gehäuse bis auf die mindestens eine Aufnahme, den Auslass und einem allfälligen Stromanschluss vollständig geschlossen ausgebildet. Das Mahlwerk ist dadurch optimal geschützt und das Gehäuse bietet alle Vorteile eines eigenständigen Moduls.

Erfindungsgemäss ist die unterste Unterseite des Gehäuses flach ausgebildet und geeignet eine Auflagefläche des Gehäuses zu bilden. Dadurch lässt sich die Kaffeemühle auf einen Tisch oder eine andere geeignete ebene Oberfläche legen, wobei darauf zu achten ist, dass der Bereich mit der die Auslassöffnung die Tischfläche überragt. Sind die inneren Bauteile der Kaffeemühle so angeordnet, dass der Schwerpunkt genügend weit von der Auslassöffnung entfernt ist, steht die Kaffeemühle auch mit dem montierten mindestens einen Kaffeebohnenbehälter sicher auf der Tischfläche und kann so benützt werden. Ist der Elektromotor der Kaffeemühle im hinteren, von der Auslassöffnung entfernten Bereich angeordnet, reicht dies üblicherweise für die Lageoptimierung des Schwerpunkts aus.

Eine derart auf dem Tisch stellbare Kaffeemühle weist den Vorteil auf, dass sie bei Nichtgebrauch einfach in einen Schrank oder auf ein Regal versorgt werden kann. Der mindestens eine Kaffeebohnenbehälter ist vorzugsweise entfernbar am Gehäuse gehalten und lässt sich somit im Kühlschrank oder an einem anderen geeigneten Ort lagern.

Alternativ oder zusätzlich zur flachen Ausbildung der untersten Unterseite der Gehäuses weist das Gehäuse erfindungsgemäss eine Aufhängevorrichtung zum Aufhängen der Kaffeemühle in einem betriebsbereiten Zustand auf. Dadurch lässt sich die Kaffeemühle an einer beliebigen Stelle in einer Küche oder einem Lokal aufhängen.

Das Gehäuse kann eine beliebige Grundform aufweisen, wobei vorzugsweise die Unterseite eben ausgebildet ist. Vorzugsweise ist das Gehäuse jedoch im Wesentlichen quaderförmig und noch bevorzugter ist das Gehäuse ein Quader. Diese Form erhöht die Flexibilität beim Einbau oder Anbau an bestehenden Kaffeebrühvorrichtungen.

Vorzugsweise ist eine Siebträger-Aufnahme am Gehäuse angeordnet, wobei die Siebträger-Aufnahme der untersten Unterseite des Gehäuses nach unten vorsteht. Somit steht die Siebträger-Aufnahme in derselben Richtung dem Gehäuse vor wie die Richtung des Auslasses verläuft. Vorzugweise sind keine Elemente vorhanden, welche dem Gehäuse seitlich oder nach oben vorstehen. Auch dies erhöht die Flexibilität bei der Verwendung in oder an unterschiedlichen Vorrichtungen.

In bevorzugten Ausführungsformen ist am Gehäuse ein Schaltelement zur Aktivierung des Mahlwerks angeordnet, wobei das Schaltelement der untersten Unterseite des Gehäuses nach unten vorsteht. Auf diese Weise bleiben die übrigen Seiten des Gehäuses frei von vorstehenden Elementen.

Vorzugsweise ist das Schaltelement durch Auflegen eines Siebträgers auf die Siebträger-Aufnahme aktivierbar oder durch Drücken eines Aktivierungselementes mit dem Siebträger. Dies vereinfacht die Bedienung, weil somit kein zusätzlicher Startknopf gedrückt werden muss.

In einer bevorzugten Ausführungsform ist die mindestens eine Aufnahme in einer obersten Oberfläche des Gehäuses ausgebildet. Dies erleichtert die Zufuhr der Kaffeebohnen ins Mahlwerk, ermöglicht ein sicheres selbstständiges Stehen des Gehäuses auch bei montiertem Kaffeebohnenbehälter und stellt zugleich sicher, dass die Seiten des Gehäuses frei bleiben und somit das Gehäuse einfach in andere Vorrichtungen oder mit anderen Vorrichtungen integriert werden kann.

Vorzugsweise ist das Gehäuse zur selbststehenden Auflage auf einer ebenen Oberfläche in einem betriebsbereiten Zustand ausgebildet. Dies lässt sich beispielsweise durch geeignete Wahl des Schwerpunktes der Kaffeemühle und durch eine flache Anordnung der Unterseite bzw. das Anbringen von kleinen Fussnoppen an der Unterseite sicherstellen.

Vorzugsweise ist das Gehäuse mit einem Sockel verbindbar. Vorteilhaft ist, dass dabei der Gestaltung des Sockels praktisch keine Einschränkungen durch das Gehäuse vorgegeben sind. Der Sockel kann beliebig gestaltet werden.

Vorzugsweise erkennt die Kaffeemühle, welche mit welchem Mahlgrad die Kaffeebohnen gemahlen werden sollen. In einer Ausführungsform weist die Kaffeemühle einen Leser auf, welcher aus einer entsprechenden Kennzeichnung auf dem Kaffeebohnenbehälter den Mahlgrad bestimmt und an eine Steuerung des Mahlwerks meldet. Beispielsweise weist der Kaffeebohnenbehälter einen RFID Tag auf und die Kaffeemühle einen entsprechenden Leser. In anderen Ausführungsformen wird der gewünschte Mahlgrad manuell über eine Eingabeeinheit der Kaffeemühle eingegeben. In einer bevorzugten Ausführungsform ist jedoch in einer der mindestens einen Aufnahme zur Befestigung des Kaffeebohnenbehälters eine mit dem Kaffeebohnenbehälter in mechanischer Wirkverbindung bringbare Schnittstelle vorhanden, welche basierend auf einer auf dem Kaffeebohnenbehälter einstellbare Mahlgradeinstellung das Mahlwerk entsprechend einstellt. Der Benützer kann somit seine gewünschte Mahlgradeinstellung am Kaffeebohnenbehälter vornehmen, beispielsweise durch Drehen eines Einstellrings. Diese Einstellung bleibt vorzugsweise auch erhalten, wenn er den Behälter nach Gebrauch entfernt und an einem anderen Ort lagert. Die mechanisch gewählte Mahlgradeinstellung wirkt beim Ankoppeln des Behälters auf das Gehäuse auf ein Getriebe ein, welches mindestens eine der zwei Mahlscheiben relativ zur anderen verschiebt und so den vorgegeben Mahlgrad einstellt. Die Dosierung und die Entlassung der Bohnen in das Mahlwerk erfolgt vorzugsweise motorgetrieben beim Einschalten der Kaffeemühle. Vorzugsweise ist das Mahlwerk liegend ausgebildet und weist Mahlscheiben auf, welche in horizontaler Richtung nebeneinander angeordnet sind. Abgesehen von der optimalen Wirkungsweise der Mühle an sich weist diese Anordnung zudem den Vorteil auf, dass die Höhe des Gehäuses relativ klein gehalten werden kann, was wiederum die Flexibilität beim Einbau oder Anbau an verschiedene Brühvorrichtungen erhöht.

In bevorzugten Ausführungsformen erstreckt sich der Auslass in geradliniger vertikaler Richtung nach unten. Dies erleichtert den Auswurf der gemahlenen Kaffeebohnen, d.h. des Kaffeemehls, und vereinfacht den Aufbau der Kaffeemühle.

Vorzugsweise ist ein Mahlwerk so im Gehäuse angeordnet, dass ein rückstandslose Mahlung und Entleerung erfolgt, so dass keine Resten früherer Mahlungen in der Kaffeemühle zurückbleiben und das Aroma einer nachfolgenden Portion beeinträchtigen könnte. So ist gewährleistet, dass stets genau die Menge Bohnen gemahlen und als Kaffeemehl ausgegeben werden, welche gerade frisch vom Behälter in die Mühle gelangt sind. Vorzugsweise weist der Kaffeebohnenbehälter einen Portionierer auf, damit stets die gewünschte Menge Bohnen gemahlen werden. Vorzugsweise ist der Portionierer mechanisch einstellbar, beispielsweise mittels eines Einstellrings am Umfang des Kaffeebohnenbehälters.

Die erfindungsgemässe Vorrichtung ist mindestens geeignet, um Einzelportionen zu mahlen und auszugeben. Je nach Ausführungsform lassen sich auch Doppelportionen oder grössere Portionen in einem Mahlgang mahlen und gemeinsam ausgeben.

Weitere Ausführungsformen sind in den abhängigen Ansprüchen angegeben.

### KURZE BESCHREIBUNG DER ZEICHNUNGEN

Bevorzugte Ausführungsformen der Erfindung sind im Folgenden anhand der Zeichnungen beschrieben, die lediglich zur Erläuterung dienen und nicht einschränkend auszulegen sind. In den Zeichnungen zeigen:
- Figur 1: eine perspektivische Darstellung einer Kaffeemühle mit einem Sockel in einer ersten erfindungsgemässen Ausführungsform;
- Figur 2: eine Seitenansicht der Kaffeemühle gemäss Figur 1;
- Figur 3: eine perspektivische Ansicht einer Kaffeemühle in einer zweiten Ausführungsform;
- Figur 4: eine perspektivische Darstellung der Kaffeemühle gemäss Figur 3 von unten und
- Figur 5: einen Längsschnitt durch die Kaffeemühle gemäss Figur 3.

### BESCHREIBUNG BEVORZUGTER AUSFÜHRUNGSFORMEN

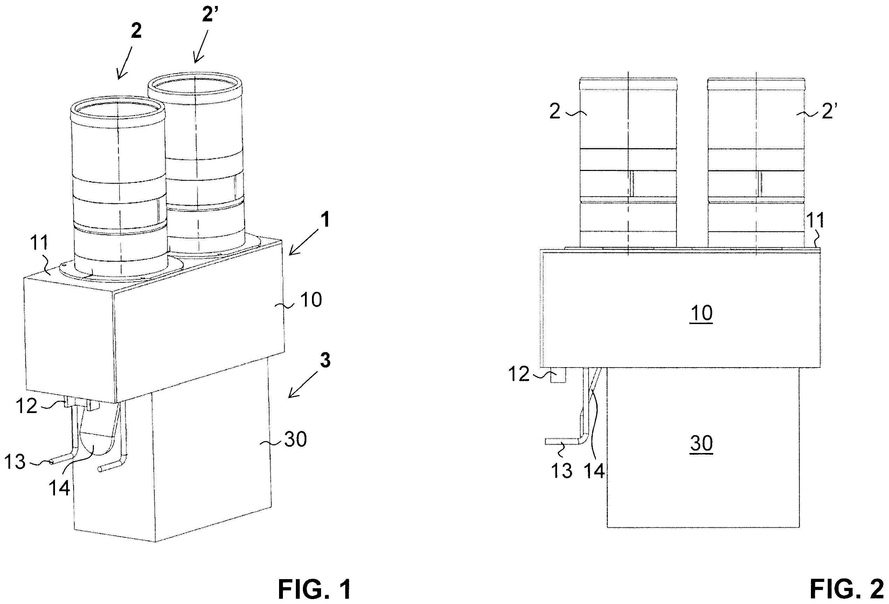

Die Figuren 1 und 2 zeigen eine erfindungsgemässe Kaffeemühle mit einem Sockel in einer ersten Ausführungsform.

Die Kaffeemühle weist ein Gehäuse 1 auf, in welchem ein Mahlwerk und eine zugehörige Steuerung angeordnet sind. Das Gehäuse 1 ist vorzugsweise ein Quader. Auf seiner Oberseite 11 ist mindestens eine Aufnahme zur Aufnahme eines Kaffeebohnenbehälters 2 angeordnet. Hier sind zwei Aufnahmen vorhanden, um zwei Kaffeebohnenbehälter 2` zu befestigen. Einer der zwei Behälter 2, 2` ist mit dem Mahlwerk verbunden, das andere ist in einer Blindlagerung auf dem Gehäuse befestigt, ohne direkten Zugang zum Innenraum des Gehäuses. Die zwei Behälter 2, 2` sind entfernbar und miteinander austauschbar.

Die Seitenflächen 10 des Gehäuses 1 sind vorzugsweise flach und frei von irgendwelchen vorstehenden Elementen. Ferner ist vorzugsweise auf einer Seitenfläche 10 ein Stecker für eine Stromnetzverbindung oder für ein Ladegerät vorhanden, mittels welchem ein im Gehäuse angeordneter Akku geladen werden kann.

Die Unterseite 15 des Gehäuses 1 ist ebenfalls vorzugsweise eben ausgebildet und bis auf einen vorderen Bereich frei von vorstehenden Elementen. Dieser ebene Bereich ist auf einem Sockel 3 angeordnet. Er kann auf ihn aufgesteckt, aufgeklebt, mit ihm verschweisst, verschraubt oder auf andere Art und Weise mit ihm verbunden sein. Der Sockel 3 kann beliebig geformt sein. Hier ist sein Gehäuse 30 ebenfalls quaderförmig ausgebildet.

Das Gehäuse 1 ist vorzugsweise aus Metall oder einem Kunststoff gefertigt. Der Sockel 3 kann aus demselben Material bestehen oder aus einem anderen Material als das Gehäuse 1 gefertigt sein. Der Sockel ist vorzugsweise ebenfalls aus Metall oder Kunststoff. Er kann hohl oder gefüllt sein, beispielsweise mit einer Vergussmasse. Er kann jedoch auch als Stauraum dienen.

Der vordere Bereich des Gehäuses 1 steht dem Sockel 3 vor. Im vorderen Bereich führt ein Auslass 12 vom Innenraum des Gehäuses 1 nach aussen. Im Bereich des Auslasses 12 ist eine Siebträger-Aufnahme 13 angeordnet, welche in diesem Beispiel aus zwei winkelförmigen Stäben gebildet ist. Sie kann auch anders geformt sein, um einen SiebTräger zu halten. Hinter der Siebträger-Aufnahme 13 ist ein Schaltelement in Form eines Betätigungsbügels 14 angeordnet, welches schwenkbar im Gehäuse 1 gehalten ist und schräg nach vorne und nach unten ragt. Wird ein Siebträger auf die Siebträger-Aufnahme 13 gelegt, so wird dadurch automatisch der Betätigungsbügel 14 nach hinten in Richtung Sockel 3 geschenkt. Der Betätigungsbügel 14 aktiviert dadurch einen Motor des Mahlwerks und die Mühle wird aktiviert.

Der Auslass 12, die Siebträger-Aufnahme 13 sowie der Betätigungsbügel 14 stehen nach unten der untersten Oberfläche des Gehäuses 1 vor.

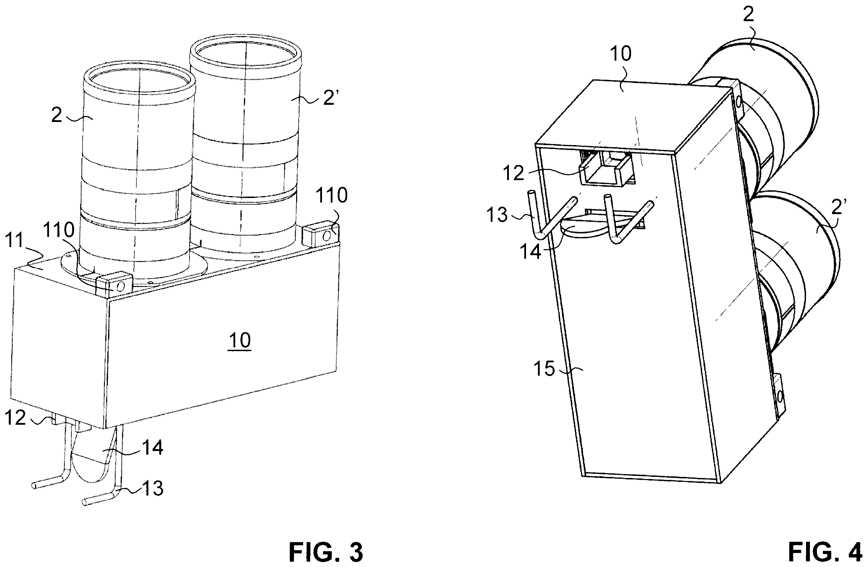

Diese erste Ausführungsform steht somit auf einem Sockel. In einer zweiten Ausführungsform ist das Gehäuse 1 eine eigenständige Einheit, welche für sich alleine auf eine Oberfläche gestellt und/oder je nach Ausführungsform aufgehängt werden kann. Diese Ausführungsform ist in den Figuren 3 bis 5 dargestellt.

Sie weist ebenfalls im vorderen Bereich auf der Unterseite des Gehäuses 1 den Auslass 12, die Siebträger-Aufnahme 13 sowie den Betätigungsbügel 14 auf. Auch die zwei Aufnahmen für die zwei Kaffeebohnenbehälter 2, 2' auf der Oberseite des Gehäuses sind dieselben wie im ersten Ausführungsbeispiel.

Vorzugsweise sind nun jedoch Aufhängeelemente 110, hier in Form von Ösen, vorhanden. Sie sind in diesem Beispiel auf der Oberseite angeordnet. Die Vorrichtung lässt sich mittels diesen Aufhängeelemente 110 an einer beliebigen Ort aufhängen. Sie lässt sich beispielsweise auch an eine bestehende Kaffeebrühmaschine anhängen.

Wie in Figur 4 gut erkennbar ist, ist die Unterseite 15 des Gehäuses 1 plan ausgebildet. Sie eignet sich optimal dazu, das Gehäuse 1 auf eine plane Fläche, beispielsweise auf einen Tisch oder ein Regal, zu stellen und dort die Kaffeemühle in Betrieb zu nehmen.

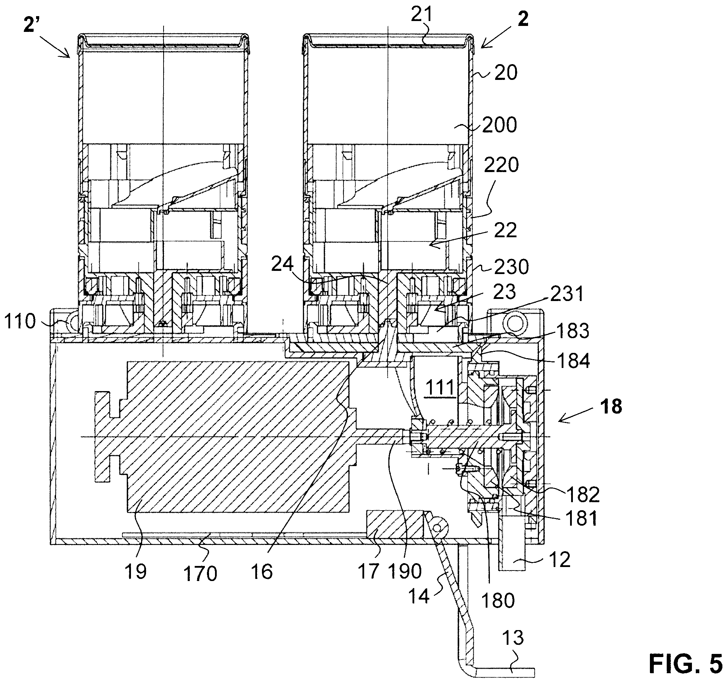

In Figur 5 ist der innere Aufbau der Kaffeemühle sowie der Kaffeebohnenbehälter 2, 2` zu erkennen. Dies ist eine bevorzugte Ausführungsform. Die Erfindung ist jedoch nicht auf einen derartigen Aufbau beschränkt.

Im Gehäuse 1 ist ein Elektromotor 19 angeordnet. Der Elektromotor 19 ist über eine Platine 170 mit einer nicht dargestellten Steuerungseinheit mit einem Schalter 17 verbunden, welcher mittels des Betätigungsbügel 14 betätigt wird und so den Motor 19 ein- und ausschaltet. Eine Energiequelle, beispielsweise ein Akku, und/oder ein Netzanschluss für den Motor 19 sind auch vorhanden, jedoch nicht dargestellt.

Eine sich bei Gebrauchslage der Kaffeemühle in horizontaler Richtung erstreckende Motorachse 190 des Elektromotors 19 treibt einen ebenfalls horizontal verlaufenden Förderrotor 180 eines Mahlwerks 18 an. Das Mahlwerk 18 ist liegend angeordnet und weist eine erste Mahlscheibe 181 und eine zweite Mahlscheibe 182 auf, welche beide vertikal ausgerichtet sind. Der Auslass 12 führt von der unteren Seite der Mahlscheiben 181, 182 annähernd geradlinig nach unten und nach aussen.

Über dem Förderrotor 180 ist ein Einlass 111 angeordnet, durch welchen Kaffeebohnen vom Kaffeebohnenbehälter 2 zu den Mahlscheiben 180, 181 gelangen. Der Kaffeebohnenbehälter 2 ist lösbar auf dem Gehäuse 1 aufgesteckt oder vorzugsweise aufgeschraubt, beispielsweise mittels eines Bajonettverschlusses.

Der Kaffeebohnenbehälter 2 ist vorzugsweise kreiszylinderförmig ausgebildet. Er weist im oberen Bereich eine Dose 20 mit einem Innenraum 200 zur Aufnahme der Kaffeebohnen auf. Die Dose 20 lässt sich mit einem oberen Deckel 21 verschliessen und wieder öffnen. In einem unteren Bereich ist ein mechanischer Dosierer 22 vorhanden, welcher vorzugsweise manuell mittels eines am Umfang des Behälters 2 angeordneten ersten Einstellrings 220 auf die gewünschte Menge Bohnen einstellen lässt. Unterhalb des Dosierers 22 ist eine mechanische Mahlwerkeinstellung 23 vorhanden. Diese ist ebenfalls mittels eines zweiten Einstellrings 230, welcher am Umfang des Behälters 2 angeordnet ist, manuell wählbar.

Zentral im Innern des Behälters 2 ist eine Antriebsachsenaufnahme 24 vorhanden, in welche bei montiertem Behälter 2 von unten eine Antriebsachse 16 aus dem Gehäuse 1 eingreift. Die Antriebsachse 16 ist motorgetrieben. Dieser zweite, kleinere Motor ist in den Figuren nicht dargestellt. Er ist ebenfalls mit der Steuerung der Mühle verbunden und durch diese gesteuert.

Wird die Mühle durch den Betätigungshebel 14 aktiviert, so dreht dieser zweite Motor die Antriebsachse. Die Kaffeebohnen werden dosiert vom Dosierer 22 in den Einlass 111 freigegeben und gelangen in das Mahlwerk 18, das durch den Elektromotor 19 betrieben wird. Dadurch gelangt das Kaffeemehl durch den Auslass 12 in den bereitgestellten Siebträger.

Damit der gewünschte Mahlgrad im Mahlwerk eingestellt wird, weist die Mahlgradeinstellung 23 verzahnte Drehringe 231 auf, welche entsprechend durch den zweiten Einstellring 230 in definierte Positionen gedreht werden. Diese Positionen führen beim Aufsetzen des Behälters 2 auf das Gehäuse 1 dazu, dass diese Einstellung über die Drehringe 231 auf eine im Gehäuse 1 angeordnete Einstellscheibe 183 auf ein Kegelrad einer Überwurfmutter 184 und somit auf das Mahlwerk 18 übertragen werden.

Andere Arten von Dosierern und von Mahlgradeinstellungen lassen sich ebenfalls verwenden, wobei die Einstellungen vorzugweise am Behälter 2 definiert werden und nach der Befestigung des Behälters 2 auf dem Gehäuse 1 an das Mahlwerk 18 übertragen werden bzw. eine im Gehäuse 1 angeordnete Vorrichtung den Dosierer 22 des Behälters 2 betätigt.

Wie in Figur 5 erkennbar ist, ist der zweite Behälter 2` zwar auf dem Gehäuse 1 befestigt, er ist jedoch nicht mit dessen Innenraum verbunden. Er dient als Ersatzbehälter oder bevorzugter zur Aufbewahrung einer anderen Kaffeesorte.

Die erfindungsgemässe Kaffeemühle ist klein, kompakt, kostengünstig, vielfältig einsetzbar sowie mit unterschiedlichen Brühvorrichtungen kombinierbar und gewährleistet optimalen Kaffeegenuss.

### BEZUGSZEICHENLISTE

| | | | |
|---|---|---|---|
| 1 | Gehäuse | 19 | Motor |
| 10 | Seitenfläche | 190 | Motorachse |
| 11 | Oberseite | | |
| 110 | Aufhängeelement | 2 | erster Behälter |
| 111 | Einlass | 2` | zweiter Behälter |
| 12 | Auslass | 20 | Dose |
| 13 | Siebträger-Aufnahme | 200 | Innenraum |
| 14 | Betätigungsbügel | 21 | Deckel |
| 15 | Unterseite | 22 | Dosierer |
| 16 | Antriebsachse | 220 | erster Einstellring |
| 17 | Schalter | 23 | Mahlgradeinstellung |
| 170 | Platine | 230 | zweiter Einstellring |
| 18 | Mahlwerk | 231 | Drehring |
| 180 | Förderrotor | 24 | Antriebsachsenaufnahme |
| 181 | erste Mahlscheibe | | |
| 182 | zweite Mahlscheibe | 3 | Sockel |
| 183 | Einstellscheibe | 30 | Sockelgehäuse |
| 184 | Überwurfmutter | | |

## Patentansprüche

1. Kaffeemühle zur Mahlung von Kaffeebohnen für die Getränkezubereitung, wobei die Kaffeemühle ein Mahlwerk (18) zum Mahlen von Kaffeebohnen und ein im Wesentlichen geschlossen ausgebildetes Gehäuse (1) aufweist, wobei das Gehäuse (1) mindestens eine Aufnahme zur Befestigung mindestens eines Kaffeebohnenbehälters (2) aufweist und wobei das Mahlwerk (18) im Gehäuse (1) angeordnet ist, wobei das Mahlwerk (18) einen Einlass (111) für die Kaffeebohnen aus dem Kaffeebohnenbehälter (2) und einen Auslass (12) für gemahlene Kaffeebohnen aufweist, wobei der Auslass (12) durch eine unterste Unterseite (15) des Gehäuses (1) nach aussen führt, wobei eine Siebträger-Aufnahme (13) am Gehäuse (1) angeordnet ist und wobei die Siebträger-Aufnahme (13) der untersten Unterseite des Gehäuses (1) nach unten vorsteht, **dadurch gekennzeichnet, dass** die unterste Unterseite (15) des Gehäuses (1) flach ausgebildet ist und geeignet ist, eine Auflagefläche des Gehäuses (1) zu bilden und/oder dass das Gehäuse (1) eine Aufhängevorrichtung (110) zum Aufhängen der Kaffeemühle in einem betriebsbereiten Zustand aufweist.

2. Kaffeemühle nach Anspruch 1, wobei das Gehäuse (1) bis auf die mindestens eine Aufnahme, den Auslass (12) und einem allfälligen Stromanschluss geschlossen ausgebildet ist.

3. Kaffeemühle nach einem der Ansprüche 1 oder 2, wobei das Gehäuse (1) im Wesentlichen quaderförmig ist, wobei das Gehäuse (1) vorzugsweise quaderförmig ist.

4. Kaffeemühle nach einem der Ansprüche 1 bis 3, wobei am Gehäuse (1) ein Schaltelement (14) zur Aktivierung des Mahlwerks (18) angeordnet ist und wobei das Schaltelement (14) der untersten Unterseite des Gehäuses (1) nach unten vorsteht.

5. Kaffeemühle nach Anspruch 4, wobei das Schaltelement (14) durch Auflegen eines Siebträgers auf die Siebträger-Aufnahme (13) aktivierbar ist.

6. Kaffeemühle nach einem der Ansprüche 1 bis 5, wobei das Gehäuse (1) eine oberste Oberfläche (11) aufweist und die mindestens eine Aufnahme zur Befestigung des Kaffeebohnenbehälters in dieser obersten Oberfläche (11) ausgebildet ist.

7. Kaffeemühle nach einem der Ansprüche 1 bis 6, wobei das Gehäuse (1) zur selbststehenden Auflage auf einer ebenen Oberfläche in einem betriebsbereiten Zustand ausgebildet ist.

8. Kaffeemühle nach einem der Ansprüche 1 bis 7, wobei das Gehäuse (1) mit einem Sockel (3) verbindbar ist.

9. Kaffeemühle nach einem der Ansprüche 1 bis 8, wobei in einer der mindestens einen Aufnahme zur Befestigung des Kaffeebohnenbehälters (2) eine mit dem Kaffeebohnenbehälter in mechanischer Wirkverbindung bringbare Schnittstelle vorhanden ist, welche basierend auf einer auf dem Kaffeebohnenbehälter (2) einstellbare Mahlgradeinstellung (23) das Mahlwerk (18) entsprechend einstellt.

10. Kaffeemühle nach einem der Ansprüche 1 bis 9, wobei das Mahlwerk (18) liegend ausgebildet ist und Mahlscheiben (181, 182) aufweist, welche in horizontaler Richtung nebeneinander angeordnet sind.

11. Kaffeemühle nach einem der Ansprüche 1 bis 10, wobei sich der Auslass (12) in geradliniger vertikaler Richtung nach unten erstreckt.

12. Einheit mit einer Kaffeemühle nach einem der Ansprüche 1 bis 11 und mit mindestens einem Kaffeebohnenbehälter (2) zur Befestigung in der Aufnahme des Gehäuses (1) der Kaffeemühle, **dadurch gekennzeichnet, dass** am Kaffeebohnenbehälter (2) ein Einstellring zur Einstellung des Mahlgrades angeordnet ist.

## Claims

1. Coffee grinder for grinding coffee beans for beverage preparation, wherein the coffee grinder comprises a grinding unit (18) for grinding coffee beans and a housing (1) of substantially closed configuration, wherein the housing (1) comprises at least one receptacle for fastening at least one coffee bean container (2), and wherein the grinding unit (18) is arranged in the housing (1), wherein the grinding unit (18) comprises an inlet (111) for the coffee beans from the coffee bean container (2) and an outlet (12) for ground coffee beans, wherein the outlet (12) leads to the outside through an lowermost lower side (15) of the housing (1), wherein a filter holder receptacle (13) is arranged on the housing (1), and wherein the filter holder receptacle (13) projects downwards beyond the lowermost lower side of the housing (1), **characterized in that** the lowermost lower side (15) of the housing (1) is a flat configuration and is suitable for forming a support surface of the housing (1), and/or **in that** the housing (1) has a hanging apparatus (110) for hanging the coffee grinder in an operationally ready state.

2. Coffee grinder according to Claim 1, wherein the housing (1) is of closed configuration apart from the at least one receptacle, the outlet (12) and a possible power connector.

3. Coffee grinder according to either of Claims 1 or 2, wherein the housing (1) is substantially cuboid, wherein the housing (1) is preferably cuboid.

4. Coffee grinder according to one of Claims 1 to 3, wherein a switching element (14) for activating the grinding unit (18) is arranged on the housing (1), and wherein the switching element (14) projects downwards beyond the lowermost lower side of the housing (1).

5. Coffee grinder according to Claim 4, wherein the switching element (14) can be activated by a filter holder being placed onto the filter holder receptacle (13).

6. Coffee grinder according to one of Claims 1 to 5, wherein the housing (1) comprises an uppermost surface (11), and the at least one receptacle for fastening the coffee bean container is configured in this uppermost surface (11).

7. Coffee grinder according to one of Claims 1 to 6, wherein the housing (1) is configured for self-standing support on a flat surface in an operationally ready state.

8. Coffee grinder according to one of Claims 1 to 7, wherein the housing (1) can be connected to a base (3).

9. Coffee grinder according to one of Claims 1 to 8, wherein is an interface which can be brought into mechanical operative connection with the coffee bean container in one of the at least one receptacle for fastening the coffee bean container (2), which interface sets the grinding unit (18) correspondingly based on a grinding degree setting (23) which can be set on the coffee bean container (2).

10. Coffee grinder according to one of Claims 1 to 9, wherein the grinding unit (18) is of horizontal configuration and comprises grinding discs (181, 182) which are arranged next to one another in the horizontal direction.

11. Coffee grinder according to one of Claims 1 to 10, wherein the outlet extends downwards in a rectilinear vertical direction.

12. Unit with a coffee grinder according to one of Claims 1 to 11 and with at least one coffee bean container (2) for fastening in the receptacle of the housing (1) of the coffee grinder, **characterized in that** a setting ring for setting the grinding degree is arranged on the coffee bean container (2).

## Revendications

1. Moulin à café pour moudre des grains de café pour la préparation de boissons, le moulin à café présentant un mécanisme de mouture (18) pour moudre des grains de café et un boîtier (1) réalisé essentiellement fermé, le boîtier (1) présentant au moins un logement pour la fixation d'au moins un réservoir de grains de café (2) et le mécanisme de mouture (18) étant agencé dans le boîtier (1), le mécanisme de mouture (18) présentant une entrée (111) pour les grains de café provenant du réservoir de grains de café (2) et une sortie (12) pour les grains de café moulus, la sortie (12) menant vers l'extérieur à travers un côté inférieur le plus bas (15) du boîtier (1), un logement de porte-filtre (13) étant agencé sur le boîtier (1) et le logement de porte-filtre (13) faisant saillie vers le bas du côté inférieur le plus bas du boîtier (1), **caractérisé en ce que** le côté inférieur le plus bas (15) du boîtier (1) est réalisé sous forme plate et est apte à former une surface d'appui du boîtier (1) et/ou **en ce que** le boîtier (1) présente un dispositif de suspension (110) pour suspendre le moulin à café dans un état prêt à fonctionner.

2. Moulin à café selon la revendication 1, dans lequel le boîtier (1) est fermé à l'exception de l'au moins un logement, de la sortie (12) et d'un éventuel raccordement électrique.

3. Moulin à café selon l'une quelconque des revendications 1 ou 2, dans lequel le boîtier (1) est essentiellement parallélépipédique, le boîtier (1) étant de préférence parallélépipédique.

4. Moulin à café selon l'une quelconque des revendications 1 à 3, dans lequel un élément de commutation (14) est agencé sur le boîtier (1) pour activer le mécanisme de mouture (18) et dans lequel l'élément de commutation (14) fait saillie vers le bas à partir du côté inférieur le plus bas du boîtier (1).

5. Moulin à café selon la revendication 4, dans lequel l'élément de commutation (14) peut être activé en plaçant un porte-filtre sur le logement de porte-filtre (13).

6. Moulin à café selon l'une quelconque des revendications 1 à 5, dans lequel le boîtier (1) présente une surface la plus haute (11) et l'au moins un logement est réalisé pour fixer le réservoir de grains de café dans cette surface la plus haute (11).

7. Moulin à café selon l'une quelconque des revendications 1 à 6, dans lequel le boîtier (1) est réalisé pour reposer de manière autonome sur une surface plane dans un état prêt à fonctionner.

8. Moulin à café selon l'une quelconque des revendications 1 à 7, dans lequel le boîtier (1) peut être relié à un socle (3).

9. Moulin à café selon l'une quelconque des revendications 1 à 8, dans lequel une interface pouvant être amenée en liaison active mécanique avec le réservoir de grains de café est présente dans l'un des au moins un logement pour la fixation du réservoir de grains de café (2), laquelle interface règle le mécanisme de mouture (18) en conséquence sur la base d'un réglage de degré de mouture (23) pouvant être réglé sur le réservoir de grains de café (2).

10. Moulin à café selon l'une quelconque des revendications 1 à 9, dans lequel le mécanisme de mouture (18) est réalisé horizontal et présente des disques de mouture (181, 182) qui sont agencés côte à côte dans la direction horizontale.

11. Moulin à café selon l'une quelconque des revendications 1 à 10, dans lequel la sortie (12) s'étend vers le bas dans une direction verticale rectiligne.

12. Unité avec un moulin à café selon l'une quelconque des revendications 1 à 11 et avec au moins un réservoir de grains de café (2) destiné à être fixé dans le logement du boîtier (1) du moulin à café, **caractérisé en ce qu'**une bague de réglage est agencée sur le réservoir de grains de café (2) pour régler le degré de mouture.
